(19) Europäisches Patentamt
European Patent Office
Office européen des brevets

(11) Veröffentlichungsnummer : **0 084 372**
**B1**

(12) # EUROPÄISCHE PATENTSCHRIFT

(45) Veröffentlichungstag der Patentschrift : **15.04.87**

(51) Int. Cl.[4] : **C 09 B 44/02**, D 06 P 1/41, D 21 H 3/82, C 09 D 11/00

(21) Anmeldenummer : **83100365.2**

(22) Anmeldetag : **17.01.83**

(54) **Benzothiazolverbindungen, Verfahren zu deren Herstellung und deren Verwendung zum Färben von Textilmaterialien, Papiermaterialien, Leder und Tinten.**

(30) Priorität : **19.01.82 CH 310/82**

(43) Veröffentlichungstag der Anmeldung : **27.07.83 Patentblatt 83/30**

(45) Bekanntmachung des Hinweises auf die Patenterteilung : **15.04.87 Patentblatt 87/16**

(84) Benannte Vertragsstaaten : **CH DE FR GB IT LI SE**

(56) Entgegenhaltungen :
**EP-A- 0 014 677**
**FR-A- 2 216 286**
**US-A- 4 071 312**

(73) Patentinhaber : **CIBA-GEIGY AG**
**Klybeckstrasse 141**
**CH-4002 Basel (CH)**

(72) Erfinder : **Adam, Jean-Marie, Dr.**
**Rue de Village Neuf 60 D**
**F-68300 Rosenau (FR)**

(74) Vertreter : **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun.**
**Bräuhausstrasse 4**
**D-8000 München 2 (DE)**

**EP 0 084 372 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Benzthiazolverbindungen der Formel I

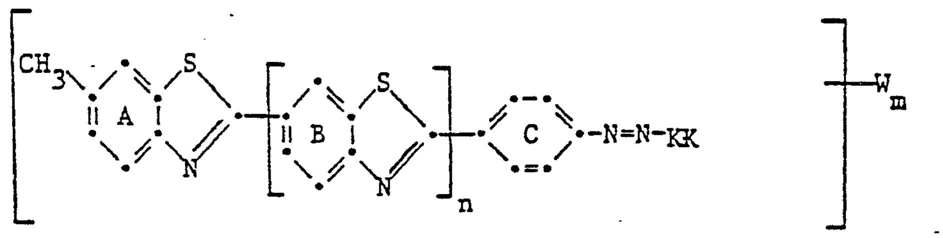

(I)

oder deren tautomeren Formen, worin bedeuten : KK den Rest einer Pyrimidin-Kupplungskomponente der Formel

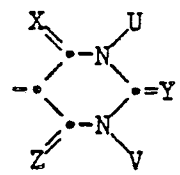

oder

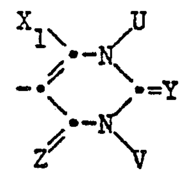

oder

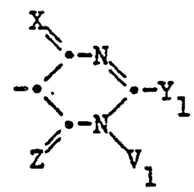

(IIIa) (IIIb) (IIIc) .

worin darstellen :

X und Z unabhängig voneinander O oder NH

Y die Gruppe O, NH, S oder N—CN

U und V unabhängig voneinander Wasserstoff, eine gegebenenfalls substituierte $C_1$-$C_4$-Alkylgruppe, eine gegebenenfalls substituierte Phenylgruppe oder eines von U oder V bedeutet CN und das andere Wasserstoff,

$X_1$ $C_1$-$C_4$-Alkyl,

$Y_1$ Wasserstoff, eine NH-Alkyl($C_1$-$C_4$)-Gruppe, eine NH-Phenyl-Gruppe, eine N(Alkyl-$C_1$-$C_4$)$_2$-Gruppe, eine Phenyl-Gruppe oder eine $C_1$-$C_4$-Alkylgruppe, und

$V_1$ Wasserstoff, eine gegebenenfalls substituierte $C_1$-$C_4$-Alkylgruppe oder eine gegebenenfalls substituierte Phenylgruppe

W einen Rest der Formel —$CH_2$—NH—CO-Alkyl($C_1$-$C_4$)-$Q^{\oplus}An^{\ominus}$, worin An ein Anion und Q einen quaternären Rest der Formeln

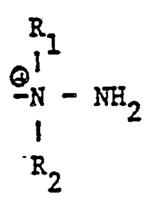 ,

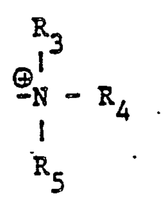

oder

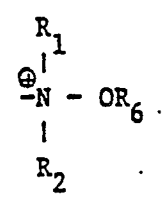

darstellt, worin bedeuten :

$R_1$ bis $R_6$ unabhängig voneinander einen gegebenenfalls substituierten $C_1$-$C_4$-Alkylrest, oder die Reste $R_1$ und $R_2$ oder $R_3$ und $R_4$ oder $R_3$ und

$R_4$ und $R_5$ bilden zusammen mit dem N-Atom einen heterocyclischen Ring ;

m die Zahlen 1, 2 oder 3 ;

n die Zahlen 0 oder 1 und worin die Benzolreste A, B und/oder C gegebenenfalls weitersubstituiert sein können.

Aus EP-A-14 677 und FR-A-2 216 286 sind Benzthiazolreste enthaltende Azoverbindungen bekannt, die durch kationische Reste über eine $-CH_2-\overset{|}{N}-$CO-Alkylen-Brücke substituiert sind. Diese Verbindungen unterscheiden sich von den oben definierten Azoverbindungen prinzipiell durch andere Kupplungskomponenten. Die US-A-4 071 312 beschreibt Benzthiazolazoverbindungen der in Formel (I) gezeigten Grundstruktur (n = 0), die jedoch keine kationischen Substituenten W enthalten. Die erfindungsgemässen Verbindungen erzielen wesentlich höhere Ausziehgrade als die aus der genannten US-A bekannten.

Sind die Benzolreste A, B und/oder C weitersubstituiert, so kommen als Substituenten vor allem $C_1$-

$C_4$-Alkylgruppen in Frage.

Handelt es sich beim Substituenten U, V und $V_1$ um eine substituierte Phenylgruppe, so kommen als Substituenten beispielsweise in Frage : $C_1$-$C_4$-Alkylgruppen, Halogen wie Fluor, Chlor oder Brom oder $C_1$-$C_4$-Alkoxygruppen wie z. B. die Methoxy-, Aethoxy-, n-Propoxy-, iso-Propoxy- und tert.-Butoxygruppe.

Bedeuten $R_1$ bis $R_6$ sowie U, V und $V_1$ eine substituierte $C_1$-$C_4$-Alkylgruppe, so kommt als Substituent vor allem die OH-Gruppe in Frage.

Bilden $R_1$ und $R_2$ und/oder $R_3$ und $R_4$ unter Einschluss des N-Atoms einen heterocyclischen Ring, so handelt es sich beispielsweise um den Morpholin-, Pyrrolidin-, Piperidin- und Piperazinring.

Bilden $R_3$ und $R_4$ zusammen mit $R_5$ unter Einschluss des N-Atoms einen heterocyclischen Ring, so handelt es sich beispielsweise um einen gegebenenfalls substituierten (z. B. durch $C_1$-$C_4$-Alkyl) Pyridiniumring oder um einen Triäthylendiaminring der Formel

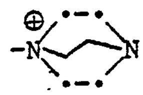 .

Der Substituent W kann direkt an die Benzolreste A, B und/oder C gebunden sein, oder indirekt auch über einen Substituenten z. B. einer Phenylgruppe in den Substituenten U, V, $V_1$ oder $Y_1$.

Der Ausdruck « $C_1$-$C_4$-Alkyl » bedeutet hier und im folgenden einen unverzweigten oder verzweigten Alkylrest mit 1 bis 4 Kohlenstoffatomen.

Es handelt sich beispielsweise um den Methyl-, Aethyl-, n-Propyl-, iso-Propyl, n-Butyl oder tert.-Butylrest.

In den bevorzugten Benzthiazolverbindungen der Formel I sind die Benzolreste A, B und C ausser durch den Substituenten W nicht weitersubstituiert ; n bedeutet die Zahl 0 und m die Zahl 1 ; KK hat die Bedeutung der Formel IIIa, worin die Substituenten X, Y und Z je Sauerstoff bedeuten oder X und Z bedeutet je Sauerstoff und Y die NH-Gruppe ; U und V bedeuten unabhängig voneinander Wasserstoff, $CH_3$, Chlorphenyl oder eines von U oder V bedeutet CN und das andere Wasserstoff und W die Gruppierung

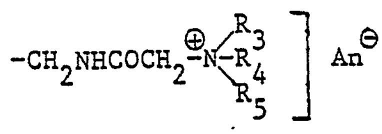

und insbesondere die Gruppierung

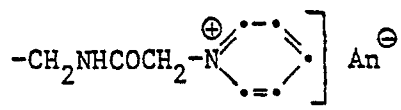 .

Als Anionen « An » kommen sowohl anorganische wie organische Anionen in Frage ; beispielsweise sind genannt : Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Q in der Bedeutung des definitionsgemässen quaternären Aminrestes stellt beispielsweise folgende Reste dar :

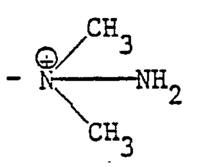 , 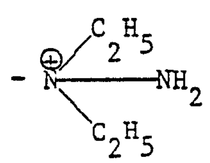 , 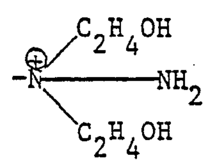 ,

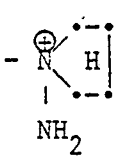 , 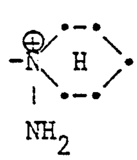 , 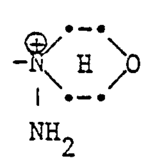 , 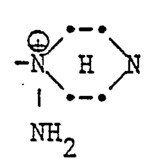 ;

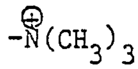 , 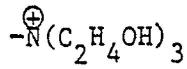 , 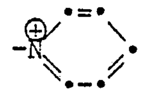 , 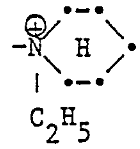 ,

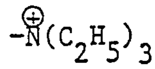 , 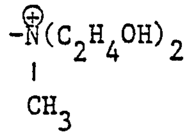 , 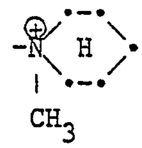 , 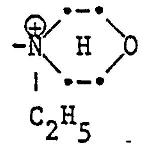 ,

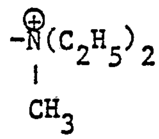 , 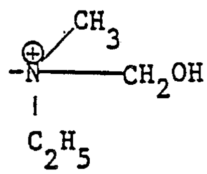 , 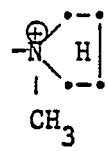 , 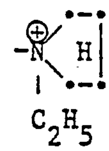 ,

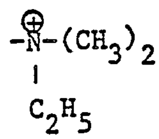 , 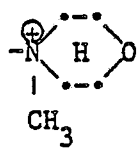 , 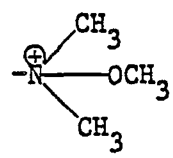 ,

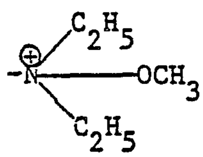 , 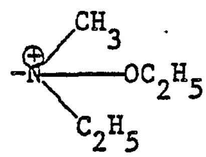 , 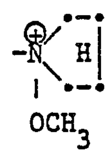 ,

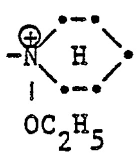 , 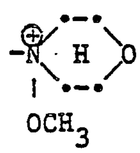 , 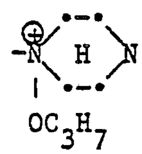 .

Liegen die Benzthiazolverbindungen in ihren tautomeren Formen vor, so kann diese Form beispielsweise bei der Pyrimidin-Kupplungskomponente KK folgende Konfigurationen haben, um aus der grossen Vielzahl nur einige hervorzuheben :

a) tautomere Form der Formel IIIa :

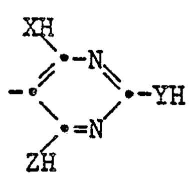 oder 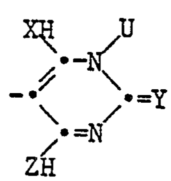

b) tautomere Form der Formel IIIb :

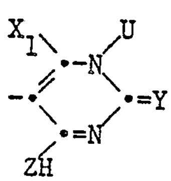 oder 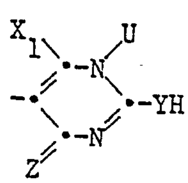

c) tautomere Form der Formel IIIc :

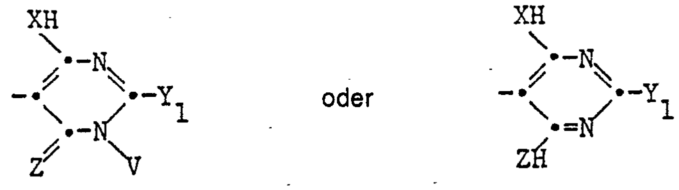

Die Herstellung der Benzthiazolverbindungen der Formel I erfolgt nach bekannter Art und Weise beispielsweise derart, dass man ein Amin der Formel II

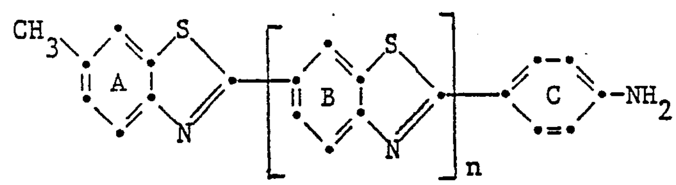

(II)

diazotiert und mit einer Kupplungskomponente der Formel III

H—KK (III)

zu einem Zwischenprodukt der Formel IV

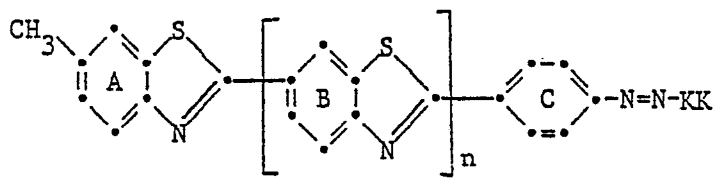

(IV)

kuppelt. Nach der Kupplung führt man in dieses Zwischenprodukt der Formel IV die Gruppe $—CH_2NHCO$-Alkyl($C_1$-$C_4$)-Hal ein und setzt anschliessend mit einem tertiären Amin um. In den Formeln II, III und IV haben die Symbole A, B, C, KK und n die unter Formel I angegebene Bedeutung und Hal bedeutet in der $—CH_2NHCO$-Alkyl($C_1$-$C_4$)-Hal-Gruppe ein Halogenatom.

Die Ausgangsverbindungen der Formel II und III und die Zwischenprodukte der Formel IV sind bekannt oder können nach bekannten Methoden hergestellt werden ; bekannt sind ebenfalls die Diazotierungs- und Kupplungsreaktion.

Die Einführung der Gruppe $—CH_2NHCO$-Alkyl $C_1$-$C_4$-Hal in das Zwischenprodukt der Formel IV erfolgt vor allem mit dem entsprechenden Methylolamid mittels der Einhornreaktion (Angew. Chem. *69*, 463 (1957). Man arbeitet dabei in Gegenwart von konzentrierter Schwefelsäure (z. B. Monohydrat) oder Phosphorsäure, gegebenenfalls zusammen mit Phosphorpentoxid, bei einer Temperatur von etwa 0° bis 50 °C, vorzugsweise bei Raumtemperatur.

Nach der Einführung dieser $—CH_2NHCO$-Alkyl $C_1$-$C_4$-Hal Gruppe in das Zwischenprodukt der Formel IV erfolgt die Umsetzung mit einem tertiären Amin (entsprechend dem Rest Q) wie Trimethylamin oder Pyridin wobei man die Benzthiazolverbindungen der Formel I erhält.

Verwendung finden die neuen Benzthiazolverbindungen der Formel I vor allem als Farbstoffe zum Färben und Bedrucken von Textilmaterialien, Papier, Leder und zur Bereitung von Tinten.

Dienen diese Farbstoffe zum Färben und Bedrucken von Textilmaterialien, so kommen als solche Wolle, Seide und sauer modifizierte Polyamidmaterialien, sowie Polyacrylnitrilmaterialien, vor allem Nasskabel, und basisch färbbares, modifiziertes Polyestermaterial in Frage. Desweiteren kommen natürliche und regenerierte Cellulosematerialien, im besonderen Baumwolle und Viscose in Frage, wobei man z. T. brillante gelbe bis orange Ausfärbungen erhält. Die erfindungsgemässen Farbstoffe der Formel I haben auf diesen Textilmaterialien vor allem auf den genannten Cellulosematerialien ein gutes Ziehvermögen, einen guten Ausziehgrad und guten Aufbau und die erhaltenen Färbungen weisen gute Echtheiten, vor allem gute Nassechtheiten und Lichtechtheit auf.

Eine weitere Verwendung der erfindungsgemässen Farbstoffe der Formel I, vor allem solcher mit einem Bortetrafluorid-Anion liegt in der Färbung von Polyacrylnitrilmaterialien in der Spinnmasse.

Eine bevorzugte Verwendung der erfindungsgemässen Farbstoffe der Formel I liegt in der

Anwendung zum Färben von Papier aller Arten, vor allem von gebleichtem und geleimtem ligninfreiem Papier. Ganz besonders geeignet sind diese Farbstoffe zum Färben von ungeleimtem Papier (Tissues) als Folge ihrer sehr hohen Standard-Affinität zu diesem Substrat.

Die erfindungsgemässen Farbstoffe ziehen sehr gut auf diese Substrate, wobei das Abwasser — auch bei tiefen Nuancen (bis über 1/1 RT = Richttyptiefe) — farblos bleibt, was ein eminenter technischer und ökologischer Vorteil, insbesondere im Hinblick auf die heutigen Abwasser-Gesetze, ist. Der gute Ausziehgrad ist auch für eine gute Reproduzierbarkeit der Nuance von Vorteil. Der Ausziehgrad wird praktisch nicht von der Wasserhärte beeinflusst. Die Färbungen sind nassecht, d. h. sie zeigen keine Neigung zum Ausbluten, wenn gefärbtes Papier in nassem Zustand mit feuchtem weissem Papier in Berührung gebracht wird. Diese Eigenschaft ist besonders für sogenannte « Tissues » erwünscht, bei denen vorhersehbar ist, dass das gefärbte Papier in nassem Zustand (z. B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier, die grosse Ausziehgeschwindigkeit der erfindungsgemässen Farbstoffe verbunden mit dem sehr guten Aufbau ist für das Kontinue-Färben von Papier von grossem Vorteil, und ermöglicht somit einen sehr breiten Einsatz dieses bekannten sehr wirtschaftlichen Verfahrens, das folgende Vorteile aufweist :

a) eine einfachere und schnellere Korrektur der Nuance und deshalb weniger Verlust an nicht Typkonformem Papier (Ausschuss) ;

b) eine bessere Konstanz der Nuance ; (kein « Tailing ») und

c) es erübrigt sich eine gründliche Reinigung der Mischbütte nach jeder Partie, wobei gleichzeitig der Arbeitsprozess verkürzt und das Verfahren optimiert wird.

Die gelben bis orangen Ausfärbungen sind brillant und haben sehr gute Echtheiten, vor allem Lichtechtheit.

Weiter dienen die Farbstoffe der Formel I zum Färben von Ledermaterialien nach den verschiedensten Applikationsverfahren, wie Sprühen, Bürsten und Tauchen und zur Bereitung von Tinten aller Art wie für Kugelschreiber und Drucktinten.

Die folgenden Beispiele veranschaulichen die Erfindung, ohne sie darauf zu limitieren. Die Temperaturen sind in Grad Celsius angegeben, Teile (T) bedeuten Gewischsteile und %-Angaben sind Gewichtsprozente.

Die Abkürzung RKN stellt eine Qualitätsbezeichnung dar und gibt den Reinheitsgrad der Cellulose an ; die Abkürzung SR = Schopper-Riegler gibt den Mahlgrad an.

Beispiel 1

24 Teile 2-(4'-Aminophenyl)-6-methylbenzthiazol werden nach bekannter Art und Weise diazotiert. Die Suspension der Diazoverbindung wird dann in ein Gemisch von 13 Teilen Barbitursäure und 22 Teilen Natriumcarbonat in Wasser eingetragen. Nach beendeter Kupplung wird die Verbindung der Formel

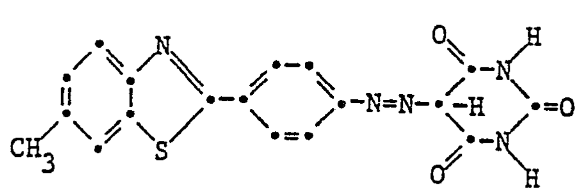

abgesaugt und getrocknet.

10 Teile der so erhaltenen Verbindung und 4 Teile N-Methylolchloracetamid werden bei 0 bis 5° in 100 Teile Monohydrat eingetragen und bei Raumtemperatur gerührt bis im Dünnschichtchromatogramm kein Ausgangsmaterial mehr vorhanden ist. Man giesst das Reaktionsgemisch auf Eis, wobei das Reaktionsprodukt ausfällt ; anschliessend wird abfiltriert und mit Wasser neutral gewaschen. Nach Trocknung erhält man 12 Teile der Verbindung :

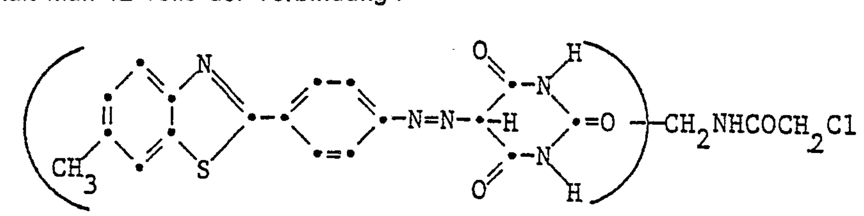

10 Teile dieser Verbindung werden in 100 Teile Pyridin 1 Stunde auf 100° erwärmt. Die ausgefallene Benzthiazolverbindung der Formel

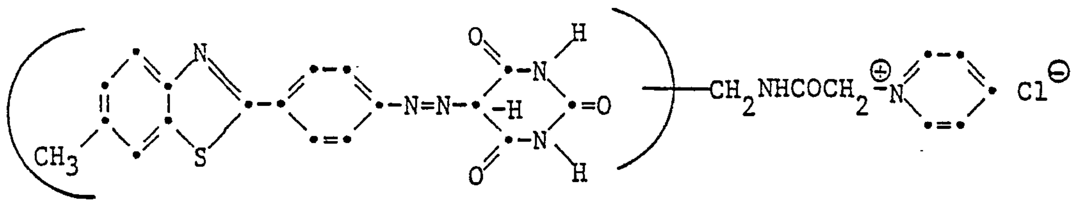

wird durch Filtration isoliert und getrocknet. Sie ist in Wasser sehr gut löslich und färbt Papier in brillanten gelben Nuancen von sehr guten Echtheiten (insbesondere Lichtechtheit) und zeigt einen ausgezeichneten Aufbau.

Beispiel 2

Ersetzt man im Beispiel 1 die 24 Teile 2-(4-Aminophenyl)-6-methylbenzthiazol durch 37 Teile Primulin-Base und verfährt im übrigen wie angegeben, so erhält man die Benzthiazolverbindung der Formel

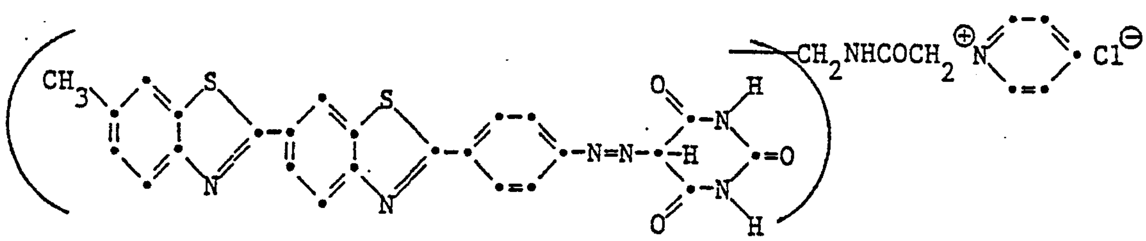

welche Papier in orangen Nuancen färbt.

Beispiele 3-17

Man verfährt wie im Beispiel 1 angegeben, verwendet jedoch anstelle von 13 Teilen Barbitursäure die äquivalente Menge der in der folgenden Tabelle 1, Kolonne 2, angegebenen Pyrimidinverbindungen so erhält man die Benzthiazolverbindungen der Formel

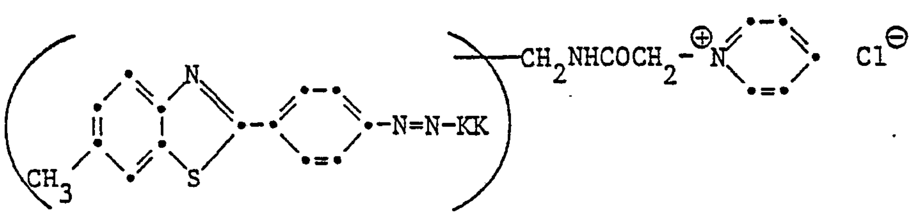

worin der Rest KK der in Kolonne 2 angegebenen Pyrimidinverbindung entspricht, welcher jeweils in 5-Stellung an die Azobrücke gebunden ist. Die Nuance, der Benzthiazolverbindungen auf Papier ist in Kolonne 3 angegeben.

(Siehe Tabelle 1 Seite 8 ff.)

Beispiel 19

Man mischt 50 Teile chemisch gebleichte Buche Sulfit mit 50 Teile gebleichtem Sulfit RKN 15 (Mahlgrad 20 °SR) und 2 Teile der Benzthiazolverbindung gemäss Beispiel 1 in Wasser (pH 6, Wasserhärte 10d °H, Temperatur 20°, Flottenverhältnis 1 : 4). Nach 15 minütigem Rühren werden Papierblätter auf einem Frank-Blattbildner hergestellt. Das Papier ist in einer sehr intensiven, brillanten, lichtechten gelben Nuance gefärbt. Der Ausziehgrad erreicht 100 %. Das Abwasser ist farblos.

Beispiel 20

Man arbeitet wie im Beispiel 19 angegeben, verwendet jedoch 2 Teile des bekannten sauren Farbstoffes der Formel

Tabelle 1

| 1 | 2 | 3 |
| --- | --- | --- |
| Beispiel Nr. | Pyrimidinverbindung | Nuance auf Papier |
| 3 | 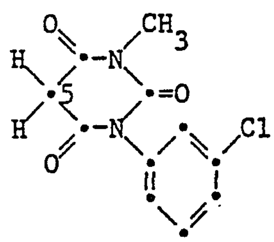 | gelb |
| 4 | 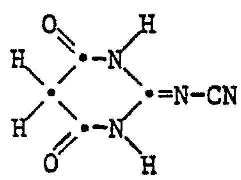 | gelb |
| 5 | 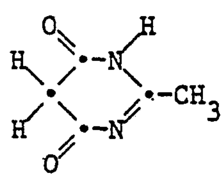 | gelb |
| 6 | 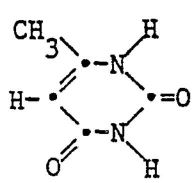 | gelb |
| 7 | 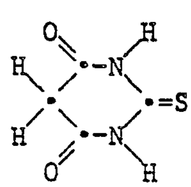 | gelb |

(Fortsetzung)

| 1 | 2 | 3 |
|---|---|---|
| Beispiel Nr. | Pyrimidinverbindung | Nuance auf Papier |
| 8 | 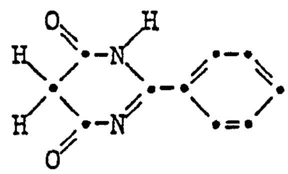 | gelb |
| 9 | 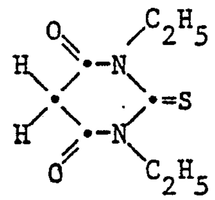 | gelb |
| 10 | 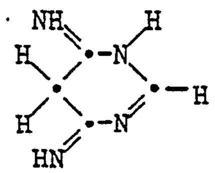 | gelb |
| 11 | 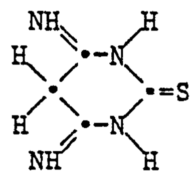 | gelb |
| 12 | 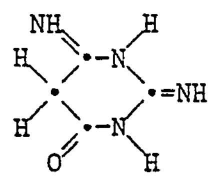 | gelb |
| 13 | 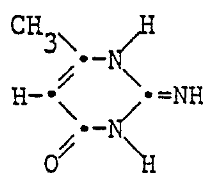 | gelb |

(Fortsetzung)

| 1 | 2 | 3 |
|---|---|---|
| Beispiel Nr. | Pyrimidinverbindung | Nuance auf Papier |
| 14 | 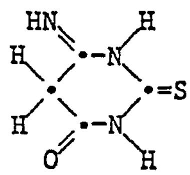 | gelb |
| 15 | 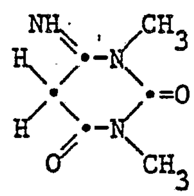 | gelb |
| 16 | 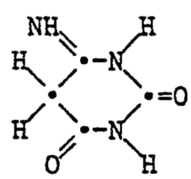 | gelb |
| 17 | 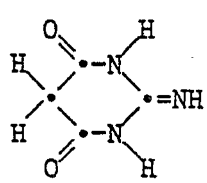 | gelb |
| 18 | 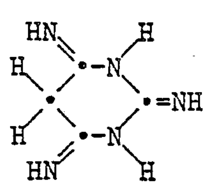 | gelb |

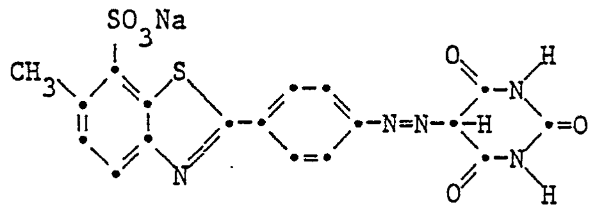

(US-P 4,071,312)
Beispiel 1

Das Papier ist in einer gelben Nuance gefärbt. Der Ausziehgrad erreicht kaum 60 %. Das Abwasser ist stark gelb gefärbt.

**Patentansprüche**

1. Benzthiazolverbindungen der Formel I

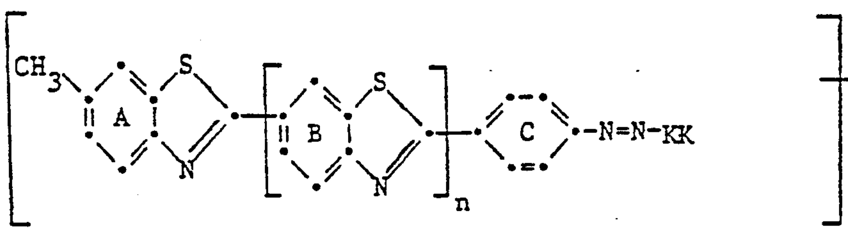

(I)

oder deren tautomeren Formen, worin bedeuten : KK den Rest einer Pyrimidin-Kupplungskomponente der Formel

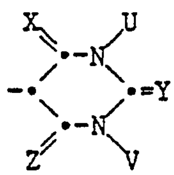 oder 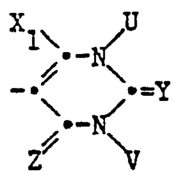 oder 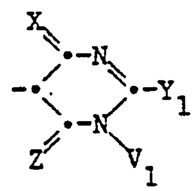

(IIIa) (IIIb) (IIIc)

worin darstellen :

X und Z unabhängig voneinander O oder NH

Y die Gruppe O, NH, S oder N—CN

U und V unabhängig voneinander Wasserstoff eine gegebenenfalls substituierte $C_1$-$C_4$-Alkylgruppe, eine gegebenenfalls substituierte Phenylgruppe oder eines von U oder V bedeutet CN und das andere Wasserstoff,

$X_1$ $C_1$-$C_4$-Alkyl,

$Y_1$ Wasserstoff, eine NH-Alkyl($C_1$-$C_4$)-Gruppe, eine NH-Phenyl-Gruppe, eine N(Alkyl-$C_1$-$C_4$)$_2$-Gruppe, eine Phenyl-Gruppe oder eine $C_1$-$C_4$-Alkylgruppe, und

$V_1$ Wasserstoff, eine gegebenenfalls substituierte $C_1$-$C_4$-Alkylgruppe oder eine gegebenenfalls substituierte Phenylgruppe

W einen Rest der Formel —$CH_2$—NH—CO-Alkyl($C_1$-$C_4$)-$Q^{\oplus}An^{\ominus}$, worin An ein Anion und Q einen quaternären Rest der Formeln

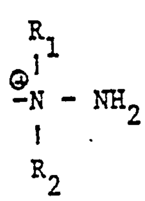 , 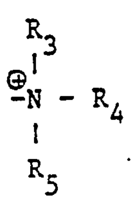 oder 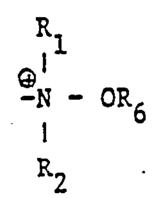

darstellt, worin bedeuten :

$R_1$ bis $R_6$ unabhängig voneinander einen gegebenenfalls substituierten $C_1$-$C_4$-Alkylrest, oder die Reste $R_1$ und $R_2$ oder $R_3$ und $R_4$ oder $R_3$ und

$R_4$ und $R_5$ bilden zusammen mit dem N-Atom einen heterocyclischen Ring ;

m die Zahlen 1, 2 oder 3 ;

n die Zahlen 0 oder 1 und worin die Benzolreste A, B und/oder C gegebenenfalls weitersubstituiert sein können.

2. Benzthiazolverbindungen der Formel I gemäss Anspruch 1, dadurch gekennzeichnet, dass die Benzolreste A, B und C ausser gegebenenfalls durch den Substituenten W nicht weitersubstituiert sind.

3. Benzthiazolverbindungen der Formel I gemäss Anspruch 1, dadurch gekennzeichnet, dass n die Zahl 0 bedeutet.

4. Benzthiazolverbindungen der Formel I gemäss Anspruch 1, dadurch gekennzeichnet, dass m die Zahl 1 bedeutet.

5. Benzthiazolverbindungen der Formel I gemäss Anspruch 1, dadurch gekennzeichnet, dass KK die Formel IIIa darstellt, worin X, Y und Z je O bedeuten.

6. Benzthiazolverbindungen der Formel I gemäss Anspruch 1, dadurch gekennzeichnet, dass KK die Formel IIIa darstellt, worin X und Z je O und Y die NH-Gruppe bedeuten.

7. Benzthiazolverbindungen der Formel I gemäss Anspruch 1, dadurch gekennzeichnet, dass KK die Formel IIIa darstellt, worin U und V unabhängig voneinander Wasserstoff, $CH_3$ oder Chlorphenyl bedeuten oder worin eines von U oder V Wasserstoff und das andere CN bedeutet.

8. Benzthiazolverbindungen der Formel I gemäss Anspruch 1, dadurch gekennzeichnet, dass W die Gruppierung

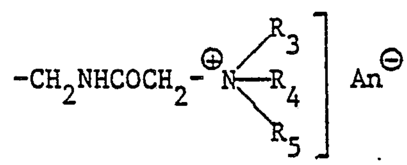

bedeutet.

9. Benzthiazolverbindungen der Formel I gemäss Anspruch 1, dadurch gekennzeichnet, dass W die Gruppierung

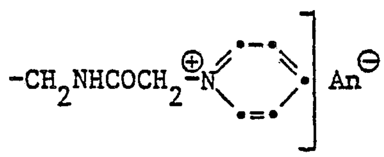

bedeutet.

10. Verfahren zur Herstellung der Benzthiazolverbindungen der Formel I gemäss Anspruch 1, dadurch gekennzeichnet, dass man ein Amin der Formel II

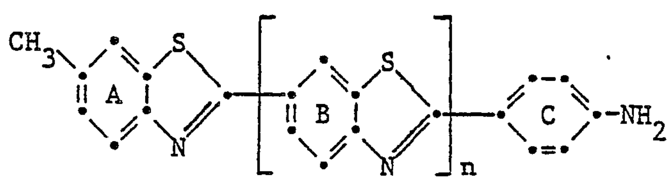

(II)

diazotiert und mit einer Kupplungskomponente der Formel III

H—KK (III)

zu einem Zwischenprodukt der Formel IV

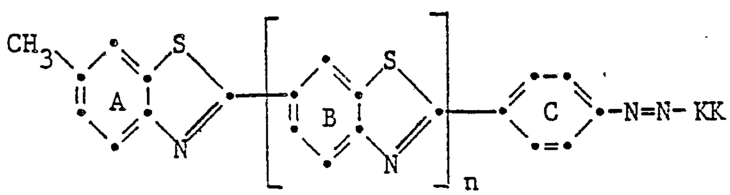

(IV)

kuppelt, in dieses Zwischenprodukt der Formel IV die Gruppe $—CH_2NHCO\text{-}Alkyl(C_1\text{-}C_4)\text{-}Hal$ einführt und diese Gruppe anschliessend mit einem tertiären Amin umsetzt, in welchen Formeln die Symbole A, B, C, KK und n die unter Formel I im Anspruch 1 angegebene Bedeutung haben und Hal ein Halogenatom

bedeutet.

11. Verwendung der Benzthiazolverbindungen der Formel I gemäss Anspruch 1 oder der gemäss dem Verfahren von Anspruch 10 erhaltenen Benzthiazolverbindungen als Farbstoffe zum Färben und Bedrucken von Textilmaterialien, Papier, Leder und zur Bereitung von Tinten.

12. Verwendung gemäss Anspruch 11 zum Färben und Bedrucken von Papier aller Arten.

13. Verwendung gemäss Anspruch 12 zum Färben und Bedrucken von gebleichtem, ungeleimtem ligninfreien Papier (Tissue).

14. Verwendung gemäss Anspruch 11 zum Färben und Bedrucken von Polyacrylnitrilmaterialien.

15. Die mit den Benzthiazolverbindungen der Formel I gemäss Anspruch 1 gefärbten und bedruckten Materialien.

**Claims**

1. A benzthiazole compound of the formula I

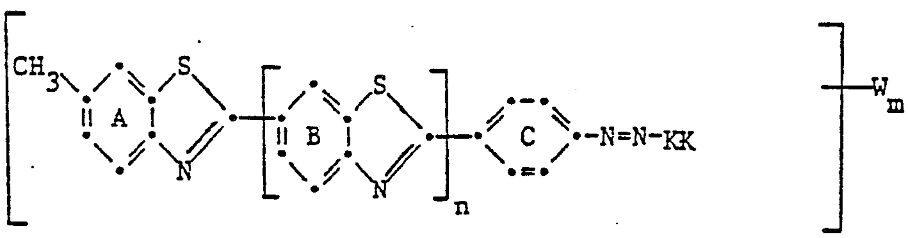

(I)

or a tautomeric form thereof, in which KK is the radical of a pyrimidine coupling component of the formula

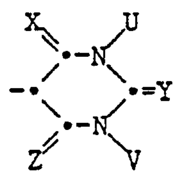 or 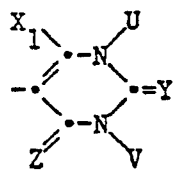 or 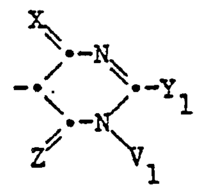

(IIIa) (IIIb) (IIIc)

in which formulae

X and Z are each independently of the other O or NH,

Y is the group O, NH, S or N—CN,

U and V are each independently of the other hydrogen, a substituted or unsubstituted $C_1$-$C_4$-alkyl group or a substituted or unsubstituted phenyl group, or one of the radicals U or V is CN and the other is hydrogen,

$X_1$ is $C_1$-$C_4$-alkyl,

$Y_1$ is hydrogen, an NH-$C_1$-$C_4$-alkyl group, an NH-phenyl group, an N-($C_1$-$C_4$-alkyl)$_2$ group, a phenyl group or a $C_1$-$C_4$-alkyl group and

$V_1$ is hydrogen, a substituted or unsubstituted $C_1$-$C_4$-alkyl group or a substituted or unsubstituted phenyl group,

W is a radical of the formula —$CH_2$—NH—CO—$C_1$-$C_4$-alkyl-Q$\oplus$An$\ominus$ in which An is an anion and Q is a quaternary radical of the formula

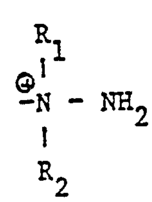 , 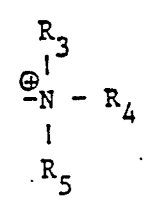 or 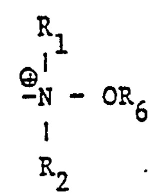

in which formulae

$R_1$ to $R_6$ are each independently a substituted or unsubstituted $C_1$-$C_4$-alkyl radical, or the radicals $R_1$ and $R_2$, or $R_3$ and $R_4$, or $R_3$ and

$R_4$ and $R_5$, together with the N atom, form a heterocyclic ring,

m is 1, 2 or 3 and

n is 0 or 1, and in which the radicals A, B and/or C of the benzene series may be further substituted.

2. A benzthiazole compound of the formula I according to claim 1, wherein the radicals A, B and C of the benzene series are not further substituted, with the exception that they may be substituted by the substituent W.

3. A benzthiazole compound of the formula I according to claim 1, wherein n is 0.

4. A benzthiazole compound of the formula I according to claim 1, wherein m is 1.

5. A benzthiazole compound of the formula I according to claim 1, wherein KK is a radical of the formula IIIa, in which X, Y and Z are each O.

6. A benzthiazole compound of the formula I according to claim 1, wherein KK is a radical of the formula IIIa, in which X and Z are each O and Y is the NH group.

7. A benzthiazole compound of the formula I according to claim 1, wherein KK is a radical of the formula IIIa, in which U and V are each independently of the other hydrogen, $CH_3$ or chlorophenyl or in which one of the radicals U or V is hydrogen and the other is CN.

8. A benzthiazole compound of the formula I according to claim 1, wherein W is the grouping

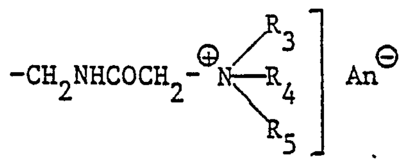

9. A benzthiazole compound of the formula I according to claim 1, wherein W is the grouping

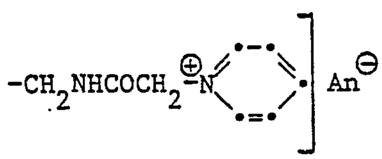

10. A process for the preparation of a benzthiazole compound of the formula I according to claim 1, which process comprises diazotising an amine of the formula II

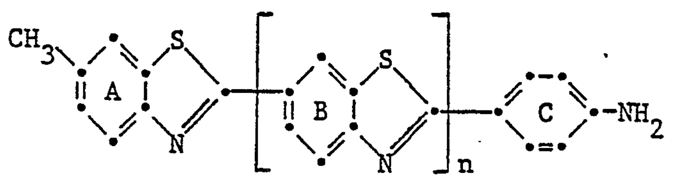 (II)

coupling the diazotisation product with a coupling component of the formula III

H—KK (III)

to give an intermediate of the formula IV

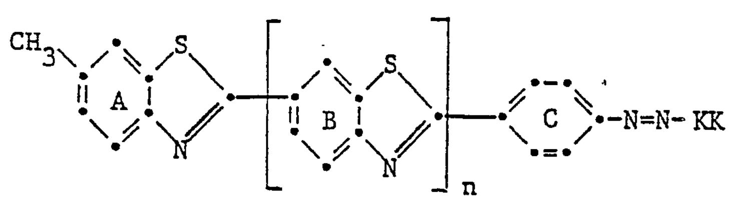 (IV)

introducing the group —$CH_2$NHCO—$C_1$-$C_4$-alkyl-Hal into this intermediate of the formula IV and then reacting this group with a tertiary amine, the symbols A, B, C, KK and n in these formulae being as defined for formula I in claim 1 and Hal being a halogen atom.

11. The use of a benzthiazole compound of the formula I according to claim 1 or of a benzthiazole compound obtained by the process according to claim 10 as a dye for dyeing and printing textile materials, paper and leather and for the preparation of inks.

12. The use according to claim 11, for dyeing and printing all types of paper.

13. The use according to claim 12, for dyeing and printing bleached, unsized lignin-free paper (tissue).

14. The use according to claim 11, for dyeing and printing polyacrylonitrile materials.

15. The materials dyed and printed with a benzthiazole compound of the formula I according to claim 1.

**Revendications**

1. Composés benzothiazole de formule I

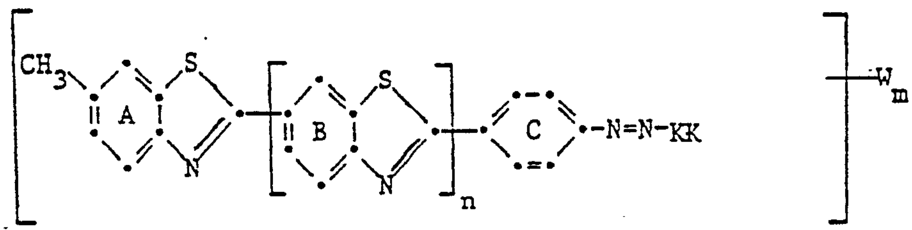

(I)

ou formes tautomères de ceux-ci, dans laquelle formule KK représente le reste d'un composant de copulation pyrimidine de formule

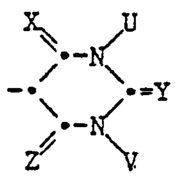

ou

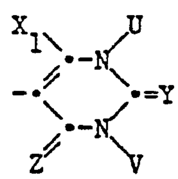

ou

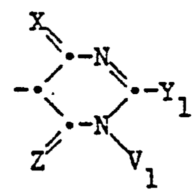

(IIIa) (IIIb) , (IIIc)

où

X et Z représentent, indépendamment l'un de l'autre, O ou NH,

Y représente O, NH, S ou N—CN,

U et V représentent, indépendamment l'un de l'autre, un atome d'hydrogène ou un groupe alkyle en $C_1$-$C_4$ éventuellement substitué, un groupe phényle éventuellement substitué, ou bien l'un des radicaux U ou V représente CN et l'autre représente un atome d'hydrogène,

$X_1$ représente un groupe alkyle en $C_1$-$C_4$,

$Y_1$ représente un atome d'hydrogène ou un groupe NH-alkyle en $C_1$-$C_4$, un groupe NH-phényle, un groupe N(alkyle en $C_1$-$C_4$)$_2$, un groupe phényle ou un groupe alkyle en $C_1$-$C_4$, et

$V_1$ représente un atome d'hydrogène ou un groupe alkyle en $C_1$-$C_4$ éventuellement substitué ou un groupe phényle éventuellement substitué ;

W représente un reste de formule $-CH_2-NH-CO$-alkyl($C_1$-$C_4$)-Q⊕An⊖, An étant un anion et Q étant un radical quaternaire de formules

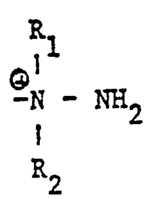

,

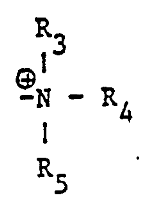

ou

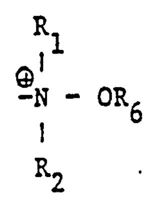

dans lesquelles

$R_1$ à $R_6$ représentent, indépendamment les uns des autres, un reste alkyle en $C_1$-$C_4$, ou bien les restes $R_1$ et $R_2$ ou $R_3$ et $R_4$ ou $R_3$ et

$R_4$ et $R_5$ forment ensemble, avec l'atome d'azote, un noyau hétéro-cyclique ;

m représente les nombres 1, 2 ou 3 ;

n représente les nombres 0 ou 1 ; et dans laquelle les restes benzéniques A, B et/ou C peuvent être éventuellement substitués davantage.

2. Composés benzothiazole de formule I selon la revendication 1, caractérisés par le fait que les restes benzéniques A, B et C ne sont pas substitués davantage, sauf éventuellement par les substituants W.

3. Composés benzothiazole de formule I selon la revendication 1, caractérisés par le fait que n représente zéro.

4. Composés benzothiazole de formule I selon la revendication 1, caractérisés par le fait que n

représente le nombre 1.

5. Composés benzothiazole de formule I selon la revendication 1, caractérisés par le fait que KK représente la formule IIIa, dans laquelle X, Y et Z représentent chacun O.

6. Composés benzothiazole de formule I selon la revendication 1, caractérisés par le fait que KK représente la formule IIIa, dans laquelle X et Z représentent chacun O et Y représente le groupe NH.

7. Composés benzothiazole de formule I selon la revendication 1, caractérisés par le fait que KK représente la formule IIIa, dans laquelle U et V représentent, indépendamment l'un de l'autre, un atome d'hydrogène, $CH_3$ ou le groupe chlorophényle, ou dans laquelle l'un des radicaux U ou V représente un atome d'hydrogène et l'autre représente CN.

8. Composés benzothiazole de formule I selon la revendication 1, caractérisés par le fait que W représente le groupement

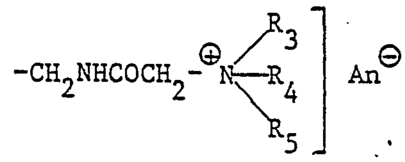

9. Composés benzothiazole de formule I selon la revendication 1, caractérisés par le fait que W représente le groupement

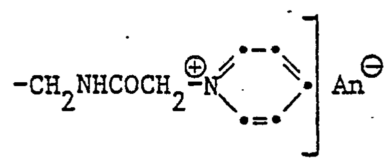

10. Procédé pour la préparation des composés benzothiazole de formule I selon la revendication 1, caractérisés par le fait que l'on diazote une amine de formule II

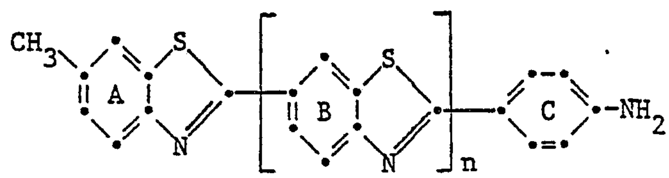

(II)

et qu'on la fait copuler avec un composant de copulation de formule III

H—KK (III)

pour aboutir à un produit intermédiaire de formule IV

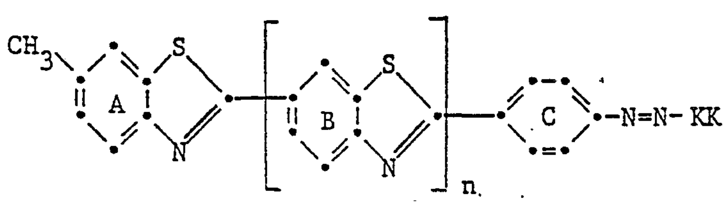

(IV)

on introduit dans ce composé intermédiaire de formule IV le groupe $—CH_2NHCO\text{-alkyl}(C_1\text{-}C_4)\text{-Hal}$, et on fait réagir ensuite ce groupe avec une amine tertiaire, dans lesquelles formules les symboles A, B, C, KK et n ont les significations données pour la formule I dans la revendication 1 et Hal représente un atome d'halogène.

11. Utilisation des composés benzothiazole de formule I selon la revendication 1 ou des composés benzothiazole obtenus selon le procédé de la revendication 10, en tant que colorants pour la teinture et l'impression de matériaux textiles, de papiers, de cuirs, et pour la préparation d'encres.

12. Utilisation selon la revendication 11, pour la teinture et l'impression de papiers de toutes sortes.

13. Utilisation selon la revendication 12, pour la teinture et l'impression de papier blanchi, non collé, exempt de lignine (papier mousseline).

14. Utilisation selon la revendication 11 pour la teinture et l'impression de matériaux en poly(acrylonitrile).

15. Les matériaux teints et imprimés avec les composés benzothiazole de formule I selon la revendication 1.